# EUROPEAN PATENT APPLICATION

(11) **EP 4 768 346 A1**
(43) Date of publication of application: **01.07.2026**
(21) Application number: 25765176.0
(22) Date of filing: 26.08.2025
(51) Int. Cl.: B60R 19/02, B60R 19/34

(54) **VEHICLE ANTI-COLLISION STRUCTURE AND ASSEMBLY METHOD THEREFOR**

(30) Priority: 28.10.2024 CN 202411506424
(71) Applicant: Tan, Jia Sheng, Heze, Shandong (CN)
(72) Inventor: Tan, Jia Sheng, Heze, Shandong (CN)
(74) Representative: Chung, Hoi Kan
(86) International application number: PCT/CN2025/116858
(87) International publication number: WO 2026/091814

(57) **Abstract**

The invention relates to the technical field of vehicle anti-collision structures, and discloses a vehicle anti-collision structure, comprising a fixing box attached to the front and rear ends of a vehicle body, a metal bottom shell connected with the fixing box, as well as a rear energy absorbing layer, multiple energy absorbing shields and a front energy absorbing layer, all of which are arranged in layers on one side of the metal bottom shell with its back to the fixing box; the energy absorbing shield comprises a curved energy decreasing shield A, a curved energy decreasing shield B, a convex energy decreasing shield, a concave energy decreasing shield, a curved energy decreasing shield C and a curved energy decreasing shield D. The vehicle anti-collision structure can decrease, absorb and disperse collision energy at various levels in the case of collision by arranging the rear energy absorbing layer, multiple energy absorbing shields and the front energy absorbing layer in layers, thus realizing energy reduction and blocking the transmission of the impact force. The energy absorption efficiency of the overall structure is improved, while the extent of damage to vehicles or pedestrians during the collision is reduced.

## Description

### Technical Field

The invention relates to the technical field of vehicle anti-collision structures, in particular to a vehicle anti-collision structure and an assembly method thereof.

### Background Art

With the rapid development of the automobile industry and the increasing number of vehicles on roads, the incidence of traffic accidents has also risen. To improve the safety performance of vehicles and reduce damage caused by collisions to both occupants and vehicles, vehicle anti-collision technology has become an important research field in automobile design.

At present, most vehicles are equipped with anti-collision beams at the front and rear ends. Their main functions are to absorb and disperse energy during a collision, avoiding a direct transfer of collision energy to the body structure, and then reducing the impact on the passengers inside the vehicle. However, the traditional anti-collision beam is usually made of metal, has a relatively simple structure and poor anti-collision properties, only offering protection for small impacts (20km/h), provides limited energy absorption during collision, and cannot fully absorb the impact energy under high impact, potentially resulting in serious damage to pedestrians and the vehicle body.

Therefore, the invention proposes a vehicle anti-collision structure and an assembly method thereof.

### Summary of the Invention

### (I) Technical problems solved

Aiming at overcoming the deficiencies of the prior art, the invention provides a vehicle anti-collision structure and an assembly method thereof, which has the advantages of blocking impact force transmission and realizing energy reduction.

### (II) Technical proposal

In order to realize the above purposes of blocking impact force transmission and realizing energy reduction, the invention provides the following technical proposal: a vehicle anti-collision structure comprises:
a fixing box attached to the front and rear ends of a vehicle body;
a metal bottom shell connected with the fixing box;
a rear energy absorbing layer, multiple energy absorbing shields and a front energy absorbing layer which are arranged in layers on one side of the metal bottom shell with its back to the fixing box.

As a preferred technical proposal of the invention, the fixing box is fixed at the front and rear ends of the vehicle body through a mounting wing on the side.

As a preferred technical proposal of the invention, an inserting column is fixed on one side of the metal bottom shell facing the fixing box, and can be inserted into the fixing box.

As a preferred technical proposal of the invention, an energy absorbing pad is also fixed at the end of the inserting column.

As a preferred technical proposal of the invention, a convex part is raised on one side of the metal bottom shell with its back to the fixing box.

As a preferred technical proposal of the invention, an energy absorbing film layer is sandwiched between two adjacent energy absorbing shields.

As a preferred technical proposal of the invention, the energy absorbing shield comprises a curved energy decreasing shield A, a curved energy decreasing shield B, a convex energy decreasing shield, a concave energy decreasing shield, a curved energy decreasing shield C and a curved energy decreasing shield D.

As a preferred technical proposal of the invention, a front sponge layer is also arranged at the front end of the front energy absorbing layer.

As a preferred technical proposal of the invention, connecting holes are arranged on the sides of the rear energy absorbing layer, multiple energy absorbing shields and the front energy absorbing layer, and connecting rods are inserted into the connecting holes and pass through side holes arranged on the side of the metal bottom shell.

### (III) Beneficial effects

Compared with the prior art, the invention provides a vehicle anti-collision structure, which has the following beneficial effects:
1. In the case of a collision, the vehicle anti-collision structure can decrease, absorb and disperse the collision energy at various levels by arranging the rear energy absorbing layer, multiple energy absorbing shields and the front energy absorbing layer in layers, thus realizing energy reduction and blocking the transmission of the impact force, then improving the energy absorption efficiency of the overall structure and reducing the extent of damage to vehicles or pedestrians during the collision.
2. In the vehicle anti-collision structure, the metal bottom shell is designed to provide good support and stability for the entire anti-collision structure, and the inserting connection between the inserting column and the fixing box ensures the close integration of the anti-collision structure and the vehicle, and avoids the risk of the structure coming loose or falling off during the collision; meanwhile, the above design also makes the anti-collision structure easy to disassemble and maintain; if a layer of the energy absorbing structure is damaged after a collision, the corresponding parts can be replaced separately, reducing maintenance costs.
3. In the vehicle anti-collision structure, various shapes (such as curved, convex, concave, etc.) of the energy absorbing shields help to effectively absorb the impact energy according to different collision scenarios (such as front, side or rear collision), and the combination of different shapes of energy absorbing shields can achieve a more flexible energy decline effect and further improve the anti-collision ability of the structure.

### Brief Description of the Drawings

Fig. 1 is the stereogram for an overall structure of the invention;
Fig. 2 is the schematic diagram for an energy absorbing shield structure of the invention;
Fig. 3 is the enlarged view for a metal bottom shell of the invention;
Fig. 4 is the exploded view for an energy absorbing shield structure of the invention;
Fig. 5 is the flow chart for an assembly method of the invention.

Reference signs: 1. Fixing box; 2. Mounting wing; 3. Metal bottom shell; 4. Inserting column; 5. Energy absorbing pad; 6. Convex part; 7. Side hole; 8. Connecting rod; 9. Rear energy absorbing layer; 10. Curved energy decreasing shield A; 11. Energy absorbing film layer A; 12. Curved energy decreasing shield B; 13. Energy absorbing film layer B; 14. Convex energy decreasing shield; 15. Concave energy decreasing shield; 16. Energy absorbing film layer C; 17. Curved energy decreasing shield C; 18. Energy absorbing film layer D; 19. Curved energy decreasing shield D; 20. Energy absorbing film layer E; 21. Front energy absorbing layer; 22. Front sponge layer; 23. Connecting hole.

### Detailed Description of the Invention

The technical proposals in the embodiments of the invention are clearly and completely described below in combination with the drawings attached to the embodiments of the invention. Obviously, the described embodiments are only part of the embodiments of the invention, and do not cover all embodiments. Based on the embodiments of the invention, all other embodiments obtained by ordinary technicians in the field without making creative labor fall within the scope of protection of the invention.

### Embodiment 1:

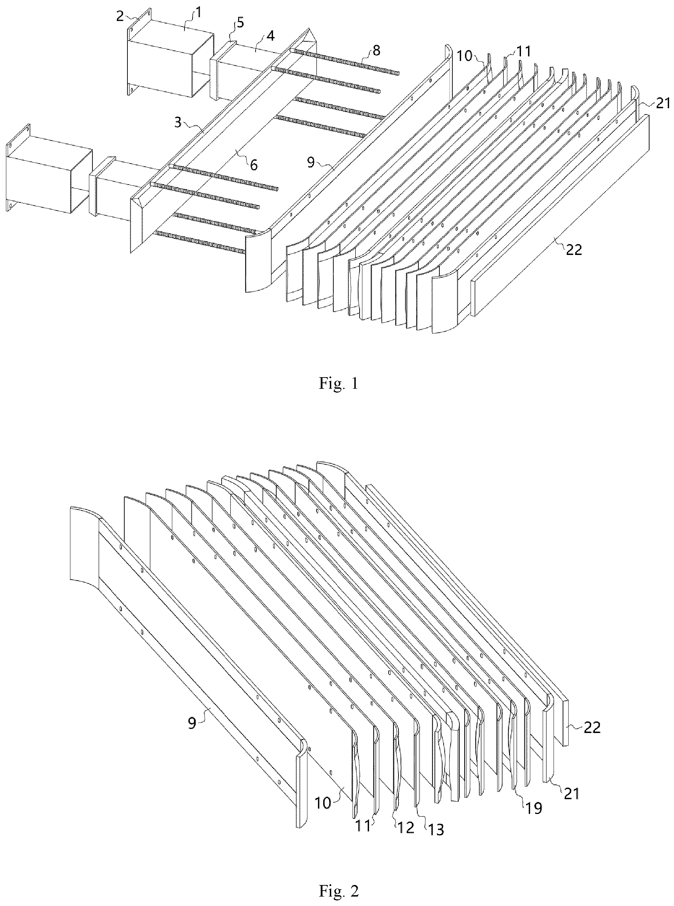

As shown in Fig. 1 to Fig. 4, a vehicle anti-collision structure comprises a fixing box 1 fixed at the front and rear ends of the vehicle body; as shown in Fig. 1, the fixing box 1 is fixed at the front and rear ends of the vehicle body through a mounting wing 2 on the side by means of bolt fixing, replacing the original anti-collision beam; the vehicles can include cars, buses, vans, trucks, high-speed trains, express trains, subway trains, trains and other types of vehicles.

In the embodiment, a metal bottom shell 3 is also arranged, an inserting column 4 is fixed on one side of the metal bottom shell 3 facing the fixing box 1 and can be inserted into the fixing box 1, thus fixing the metal bottom shell 3; as shown in Fig. 1, an energy absorbing pad 5 is also fixed at the end of the inserting column 4 to provide energy absorption and buffering in the case of collision;
Of course, technicians in the field can also select other forms of installation, for example, sleeving the inserting column 4 on the fixing box 1 for fixing or attaching it by means of welding, bolting, clamping, etc., as the case may be.

As shown in Fig. 1, a rear energy absorbing layer 9, multiple energy absorbing shields and a front energy absorbing layer 21 are arranged in layers on the side of the metal bottom shell 3 facing the fixed box 1; specifically, connecting holes 23 are arranged on the sides of the rear energy absorbing layer 9, multiple energy absorbing shields and the front energy absorbing layer 21, and connecting rods 8 are inserted into the connecting holes 23, pass through side holes 7 arranged on the side of the metal bottom shell 3, act as a skeleton and can support the rear energy absorbing layer 9, the energy absorbing shields and the front energy absorbing layer 21.

The metal bottom shell 3 is designed to provide good support and stability for the entire anti-collision structure, and the inserting connection between the inserting column 4 and the fixing box 1 ensures the close integration of the anti-collision structure and the vehicle and avoids the risk of the structure coming loose or falling off during the collision; meanwhile, the above design also makes the anti-collision structure easy to disassemble and maintain; if a layer of energy absorbing structure is damaged after a collision, the corresponding parts can be replaced separately, reducing maintenance costs.

In the embodiment, the vehicle anti-collision structure can decrease, absorb and disperse collision energy at various levels by arranging the rear energy absorbing layer 9, multiple energy absorbing shields and the front energy absorbing layer 21 in layers, thus realizing energy reduction and blocking the transmission of the impact force, then improving the energy absorption efficiency of the overall structure and reducing the extent of damage to vehicles or pedestrians in the collision.

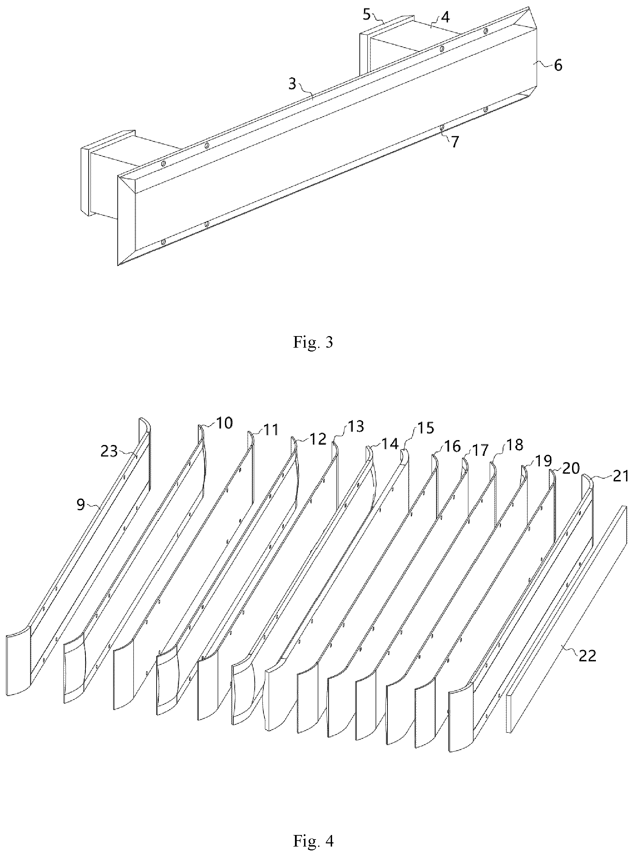

As shown in Fig. 4, a front sponge layer 22 can also be arranged at the front end of the front energy absorbing layer 21 to provide additional cushioning during collision, further dispersing the impact force when the collision energy is first received, and protecting the safety of the vehicle body and occupants; the front sponge layer 22 can also be replaced with similar materials.

As shown in Fig. 3, a convex part 6 is raised on one side of the metal bottom shell 3 with its back to the fixing box 1 to provide additional cushioning by the collapse deformation of the convex part 6 during collision.

In the embodiment, taking the anti-collision structure installed at the head of the vehicle as an example, as shown in Fig. 4, the energy absorbing shield specifically comprises a curved energy decreasing shield A 10, a curved energy decreasing shield B 12, a convex energy decreasing shield 14, a concave energy decreasing shield 15, a curved energy decreasing shield C 17 and a curved energy decreasing shield D 19, wherein an energy absorbing film layer is sandwiched between two adjacent energy absorbing shields; specifically, an energy absorbing film layer A 11 is sandwiched between the curved energy decreasing shield A 10 and the curved energy decreasing shield B 12, an energy absorbing film layer B 13 is sandwiched between the curved energy decreasing shield B 12 and the convex energy decreasing shield 14, an energy absorbing film layer C 16 is sandwiched between the concave energy decreasing shield 15 and the curved energy decreasing shield C 17, an energy absorbing film layer D 18 is sandwiched between the curved energy decreasing shield C 17 and the curved energy decreasing shield D 19, an energy absorbing film layer E 20 is sandwiched between the curved energy decreasing shield D 19 and the front energy absorbing layer 21, multiple energy absorbing film layers can break and absorb energy in the case of impact force, while the multiple energy decreasing shields can decrease energy;

Various shapes (such as curved, convex, concave, etc.) of energy absorbing shields help to effectively absorb the impact energy according to different collision scenarios (such as front, side or rear collision), and the combination of different shapes of energy absorbing shields can achieve a more flexible energy reduction effect and further improve the anti-collision ability of the anti-collision structure.

If the anti-collision structure is installed at the tail of the vehicle, the curved energy decreasing shield B 12, the energy absorbing film layer B 13, the energy absorbing film layer D 18 and the curved energy decreasing shield D 19 can be selectively removed, thus saving on costs while still ensuring the anti-collision effect and ability.

In the embodiment, the front energy absorbing layer 21 and the rear energy absorbing layer 9 are composed of multiple layers of polyethylene tape to form an energy absorbing layer, which can absorb the impact force and block the transmission of the impact force; the energy absorbing layer can be polyethylene tape, polyvinylidene chloride tape or polyvinyl chloride tape, or can be a plastic bag, thus providing waste utilization.

The energy absorbing film layer can be polyethylene tape, polyvinylidene chloride tape or polyvinyl chloride tape, or can be a plastic bag, thus providing waste utilization;
In the embodiment, a buffering cavity is formed between the curved energy decreasing shield and the adjacent energy absorbing film layer, and there is a space for separation to block the propagation of the impact energy.

In the invention, the curved energy decreasing shield, the fixing box 1, the metal bottom shell 3 and the frame for the energy absorbing film layer can be made of aluminum magnesium alloy or manganese steel alloy, or can be other metals or carbon fiber as required; the connecting rods 8 can be spring telescopic rods or connecting rods in other forms, the number of connecting rods 8 can be eight, or can be added or reduced as needed.
Control experiment 1: The field test shows that the front bumper is crushed and the anti-collision beam dented at a vehicle speed of more than 20km/h if the invention is not installed;
Experiment 1: When the invention is installed, the front vehicle body shell is only slightly scratched and the parts, hood and lights are not damaged at a vehicle speed above 20km/h;
Control experiment 2: The field test shows that the front bumper is crushed, the anti-collision beam dented and the lights damaged at a vehicle speed of more than 40km/h if the invention is not installed;
Experiment 2: When the invention is installed, the front vehicle body shell is only scratched and the parts, hood and lights are not damaged at a vehicle speed above 40km/h;

### Embodiment 2:

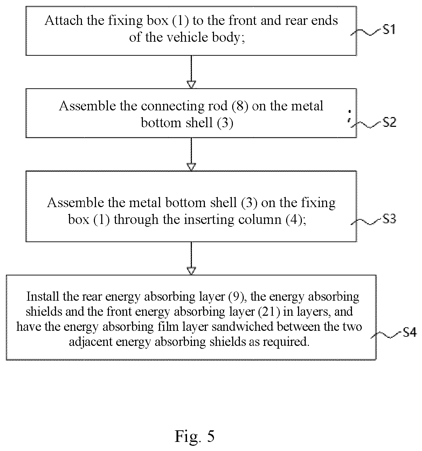

As shown in Fig. 5, on the basis of the embodiment 1, the embodiment proposes an assembly method for a vehicle anti-collision structure, including the following steps:
S1. Attaching the fixing box 1 to the front and rear ends of the vehicle body;
S2. Assembling the connecting rod 8 on the metal bottom shell 3;
S3. Assembling the metal bottom shell 3 on the fixing box 1 through the inserting column 4;
S4. Installing the rear energy absorbing layer 9, multiple energy absorbing shields and the front energy absorbing layer 21 in layers, and having the energy absorbing film layer sandwiched between the two adjacent energy absorbing shields as required.

If the vehicle anti-collision structure is installed on an older vehicle, the original anti-collision beam can be removed; if the vehicle anti-collision structure is installed on a new vehicle, it can be installed directly.

Although the embodiments of the invention have been shown and described, it is understandable for ordinary technicians in the field that these embodiments may be varied, changed, substituted and modified in various forms without deviation from the principle and spirit of the invention, and the scope of the invention is limited by the attached claims and their equivalents.

## Claims

1. A vehicle anti-collision structure, **characterized by** comprising:a fixing box (1) attached to the front and rear ends of a vehicle body;a metal bottom shell (3) connected with the fixing box (1);a rear energy absorbing layer (9), multiple energy absorbing shields and a front energy absorbing layer (21) which are arranged in layers on one side of the metal bottom shell (3) with its back to the fixing box (1);

2. The vehicle anti-collision structure in claim 1, **characterized in that** the fixing box (1) is fixed at the front and rear ends of the vehicle body through a mounting wing (2) on the side.

3. The vehicle anti-collision structure in claim 1, **characterized in that** an inserting column (4) is fixed on one side of the metal bottom shell (3) facing the fixing box (1), and can be inserted into the fixing box (1).

4. The vehicle anti-collision structure in claim 3, **characterized in that** an energy absorbing pad (5) is also fixed at the end of the inserting column (4).

5. The vehicle anti-collision structure in claim 1, **characterized in that** a convex part (6) is raised on one side of the metal bottom shell with its (3) back to the fixing box (1).

6. The vehicle anti-collision structure in claim 1, **characterized in that** an energy absorbing film layer is sandwiched between two adjacent energy absorbing shields.

7. The vehicle anti-collision structure in claim 1 , **characterized in that** the energy absorbing shield comprises a curved energy decreasing shield A (10), a curved energy decreasing shield B (12), a convex energy decreasing shield (14), a concave energy decreasing shield (15), a curved energy decreasing shield C (17) and a curved energy decreasing shield D (19).

8. The vehicle anti-collision structure in claim 1, **characterized in that** a front sponge layer (22) is also arranged at the front end of the front energy absorbing layer (21).

9. The vehicle anti-collision structure in claim 1, **characterized in that** connecting holes (23) are arranged on the sides of the rear energy absorbing layer (9), multiple energy absorbing shields and the front energy absorbing layer (21), and connecting rods (8) are inserted into the connecting holes (23) and pass through side holes (7) arranged on the side of the metal bottom shell (3).

10. An assembly method for the vehicle anti-collision structure according to claim 1, **characterized by** including the following steps:
S1. Attached a fixing box (1) to the front and rear ends of the vehicle body;
S2. Assembling a connecting rod (8) on the metal bottom shell (3);
S3. Assembling the metal bottom shell (3) on the fixing box (1) through the inserting column (4);
S4. Installing the rear energy absorbing layer (9), multiple energy absorbing shields and the front energy absorbing layer (21) in layers, and having the energy absorbing film layer sandwiched between the two adjacent energy absorbing shields as required.
